# EUROPEAN PATENT SPECIFICATION

(11) **EP 2 205 344 B1**
(45) Date of publication and mention of the grant of the patent: **12.12.2012**
(21) Application number: 08843823.9
(22) Date of filing: 07.10.2008
(51) Int. Cl.: B01D 63/02, B01D 63/04

(54) **MEMBRANE HOLDER**
MEMBRANENHALTER
PORTE-MEMBRANE

(30) Priority: 01.11.2007 NL 1034617
(43) Date of publication of application: 14.07.2010
(73) Proprietor: Demand Holding B.V., 7442 CL Nijverdal (NL)
(72) Inventor: BERENDS, Hendrik, Johan, Ferdinand, NL-7443 LX Nijverdal (NL)
(74) Representative: de Lange, Hendrik Cornelis
(86) International application number: PCT/NL2008/000220
(87) International publication number: WO 2009/057997

(56) References cited:
- WO-A-02/074423
- WO-A-2004/043578
- WO-A-2005/070523
- JP-A- 7 124 445
- JP-A- 10 337 449
- JP-A- 11 169 676
- JP-A- 2004 089 801

## Description

The invention relates to a membrane holder for holding together a large number of elongate filter elements such that they can be introduced into a tube, after which the filter membranes are cast in synthetic resin.

EP-A-1 560 639, which is an earlier application of applicant, describes a system wherein cartridges are filled with elongate filter membranes, after which these cartridges are pushed one by one into the filter housing. The cartridge is here pushed onto a guide rail arranged on the inner side of the filter housing such that, after being pushed in, the cartridge can no longer change position and cannot impede the insertion of other cartridges.

This prior art system provides advantages in the automation of the manufacture of filters. However, insertion one by one into the filter housing requires the due precision.

JP10337449 A of DAISEN discloses another example of prior art. The document discloses a membrane holder, comprising a number of cartridges for holding elongate filter membranes, which cartridges have a substantially V-shaped cross-section. The cartridges are connected to each other in longitudinal direction at right angles to the cross-section.

It is now an object of the invention to provide a membrane holder which further simplifies automation of the manufacture of filters.

This object is achieved with a membrane holder comprising a number of cartridges for holding elongate filter membranes, which cartridges have a substantially V-shaped cross-section, wherein the cartridges are connected hingedly to each other in longitudinal direction at right angles to the cross-section.

The relative position of the cartridges is determined by the hinged connection of the cartridges to each other, whereby the different cartridges required for the manufacture of a filter can be handled as one whole. Owing to the V-shape and the hinged connection it is moreover possible to roll the cartridges to form a cylinder so that the cartridges can be pushed in one operation into a filter housing.

In one embodiment the cartridges are elongate. The generally flexible filter membranes can hereby be readily supported. However, if the filter membranes have a reasonable stiffness, it is also possible for the cartridges to have only a shorter length in order to properly hold together the bundles of filter membranes. It is however recommended that the length of the cartridges is substantially the same as the length of the elongate filter membranes. The filter membranes are hereby properly supported and the risk of damage to the filter membranes is limited.

In yet another embodiment of the membrane holder according to the invention the cartridges comprise a truncated wedge-shaped cross-section.

Hereby created in the centre of cartridges rolled up to form a cylinder is a cylindrical cavity which can for instance be used for passage of a tube.

In a further preferred embodiment of the membrane holder according to the invention each cartridge comprises an enclosing element for closing the open side of the cartridge in order to enclose the filter membranes in the cartridges. The enclosing element prevents the filter membranes falling out of the cartridges, for instance when they are being rolled up.

The enclosing element is preferably a film which extends over and connects the cartridges hingedly to each other. The advantage of a film is that it does not greatly hamper the liquid flow in a filter, and does not stand in the way of a good filtering action of the filter membranes. It is moreover an element which is easy to handle during manufacture and which can for instance be arranged on the cartridges by means of welding.

Another option is that the enclosing element is a bracket arranged on the cartridge.

The invention further comprises a method for manufacturing a filter, comprising the steps of:
- providing a number of cartridges of substantially V-shaped cross-section which are connected hingedly to each other in longitudinal direction at right angles to the cross-section;
- filling the cartridges with filter membranes;
- rolling up the cartridges to a cylindrical form;
- pushing the rolled-up cartridges into a cylindrical tube.

A preferred embodiment of the method according to the invention comprises the step of closing the open side of the cartridges in order to prevent the filter membranes falling out during rolling-up.

In a particular embodiment the cartridges are connected hingedly to each other by a film arranged on the cartridge, and the open side of the cartridges is also closed by the film. Separate cartridges of V-shaped cross-section can thus be used which are connected hingedly to each other by the film before they are rolled up.

Another embodiment of the method according to the invention comprises the step of providing a cylindrical guide, which has an inlet opening in longitudinal direction such that the cartridges can be fed successively into the cylindrical guide and can be rolled up lying against the wall to form a cylinder. Using this method the use of a closing element can be dispensed with. The closure is in fact provided by the cylindrical guide against which the cartridges are arranged. When the cartridges are rolled up to form a cylinder, they can be pushed from the cylindrical guide directly into a tube.

These and other features of the invention are further elucidated with reference to the accompanying drawings.
Figure 1 shows a cross-section of a first embodiment of a membrane holder according to the invention.
Figure 2 shows how the membrane holder of figure 1 is rolled up.
Figure 3 shows a second embodiment of a membrane holder according to the invention and the manner in which it can be rolled into a cylindrical form.
Figures 4A and 4B show the rolled-up membrane holder as according to figure 1.

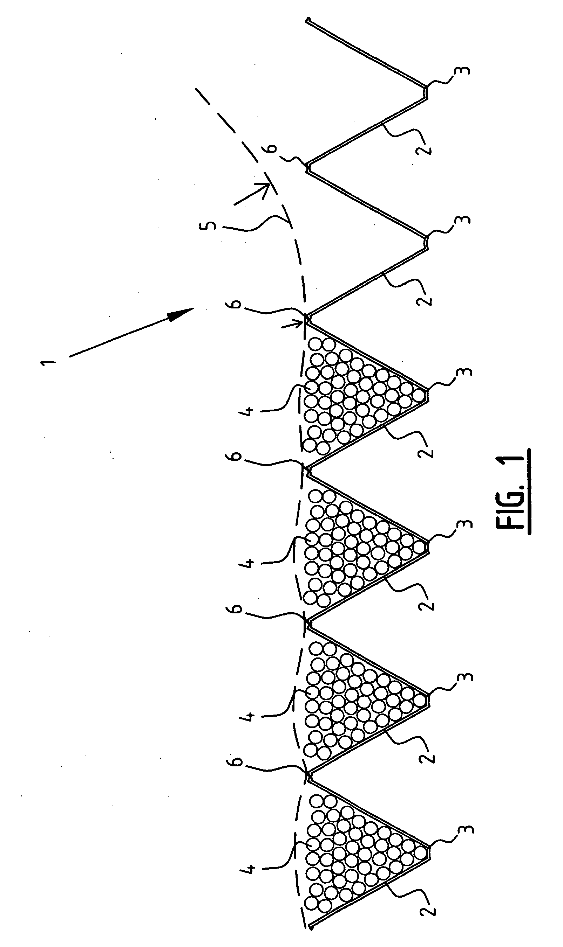

Figure 1 shows a membrane holder 1 in flat position.

Membrane holder 1 consists of a number of cartridges 2 having a substantially V-shaped cross-section. The underside 3 is truncated, whereby a central passage is created in the rolled-up position. Filter membranes 4 are placed in cartridges 2.

A film 5 is then placed over cartridges 2 in order to prevent filter membranes 4 falling out of the cartridges.

Cartridges 2 are connected hingedly to each other at 6 by means of a linear hinge or by means of an arranged film 5.

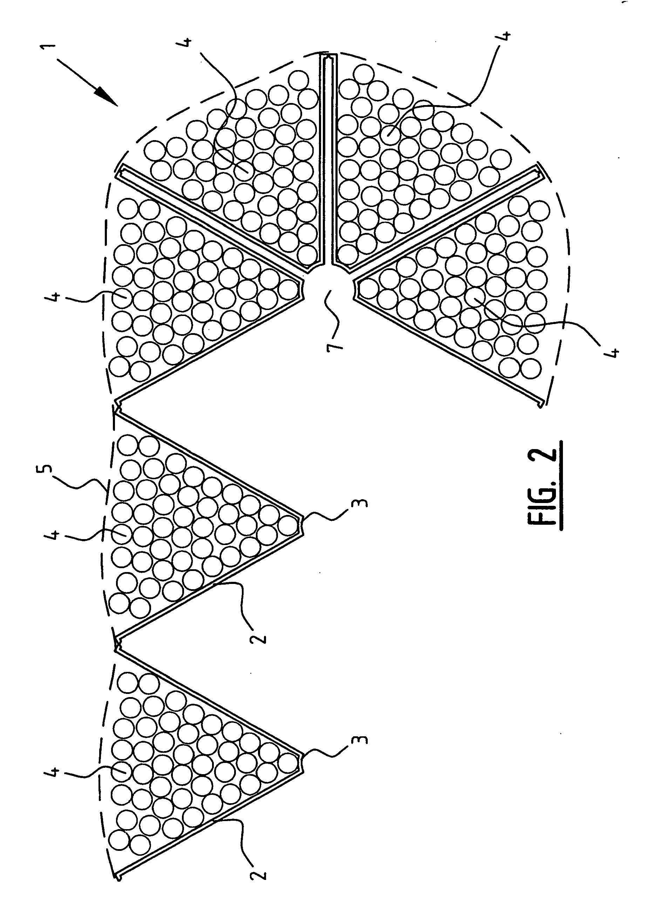

In figure 2 a membrane holder 1 as according to figure 1 is rolled up. Due to the truncated underside 3 of cartridges 2, a central passage 7 is created in the cartridges 2 rolled up to form a cylinder.

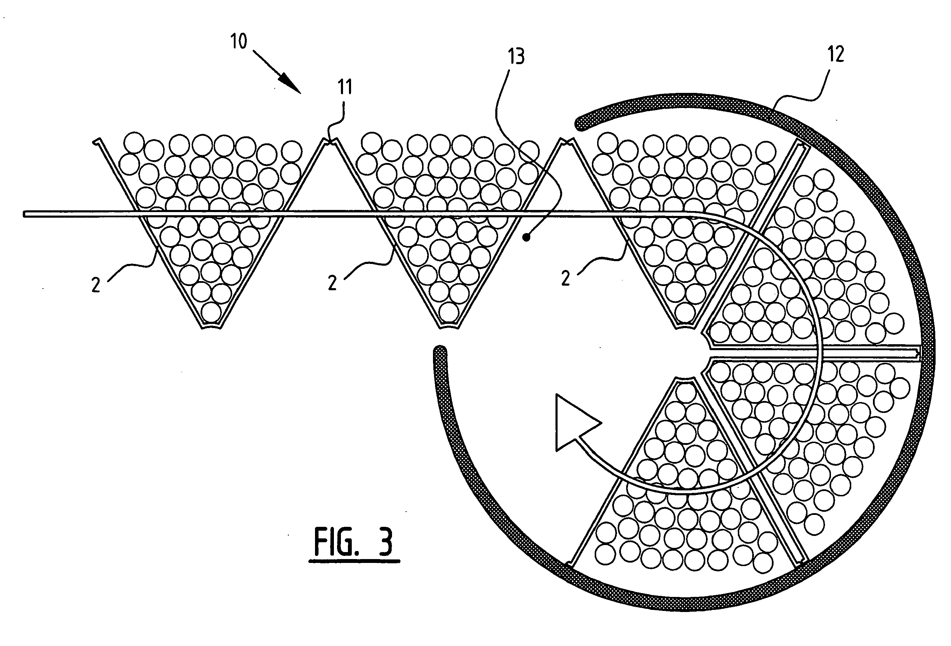

Figure 3 shows a second embodiment of a membrane holder 10. This membrane holder 10 likewise comprises cartridges 2 of a substantially V-shaped cross-section. These cartridges 2 are connected hingedly to each other by means of a linear hinge 11.

Provided for the purpose of rolling this membrane holder 10 into a cylindrical form is a cylindrical guide plate 12 which has an inlet opening 13 extending along the lengthwise direction and enabling the passage of a cartridge 2. The cartridges are then carried via inlet opening 13 into the cylindrical guide plate 12 such that cartridges 2 come to lie against the inner wall of guide plate 12 and can thus be rolled into a cylindrical form.

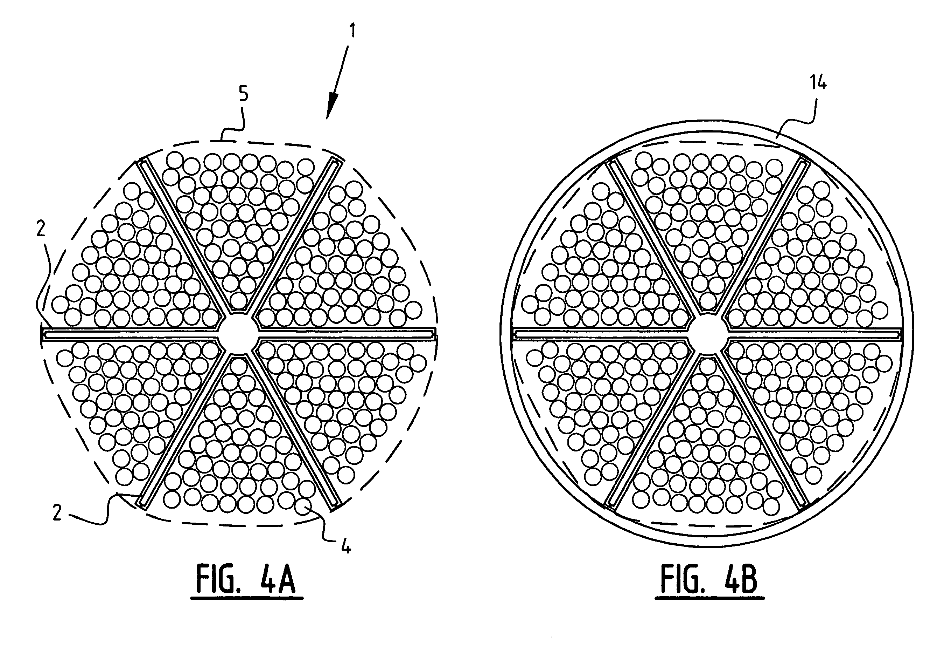

Figure 4A further shows a cross-sectional view of membrane holder 1 in the rolled-up position. Film 5 here ensures that filter membranes 4 do not fall out of cartridges 2. In this rolled-up position as shown in figure 4A, membrane holder 1 can be pushed into a cylindrical filter housing 14 as shown in figure 4B. The filter can then be further finished by providing the two outer ends of filter housing 14 with a synthetic resin plug and further accessories in order to provide a membrane filter.

## Claims

1. Membrane holder, comprising a number of cartridges for holding elongate filter membranes, which cartridges have a substantially V-shaped cross-section, wherein the cartridges are connected hingedly to each other in longitudinal direction at right angles to the cross-section.

2. Membrane holder as claimed in claim 1, wherein the cartridges are elongate.

3. Membrane holder as claimed in claim 2, wherein the length of the cartridges is substantially the same as the length of the elongate filter membranes.

4. Membrane holder as claimed in any of the foregoing claims, wherein the cartridges comprise a truncated wedge-shaped cross-section.

5. Membrane holder as claimed in any of the foregoing claims, wherein each cartridge comprises an enclosing element for closing the open side of the cartridge in order to enclose the filter membranes in the cartridges.

6. Membrane holder as claimed in claim 5, wherein the enclosing element is a film which extends over and connects the cartridges hingedly to each other.

7. Membrane holder as claimed in claim 5, wherein the enclosing element is a bracket arranged on the cartridge.

8. Method for manufacturing a filter, comprising the steps of:
- providing a number of cartridges of substantially V-shaped cross-section which are connected hingedly to each other in longitudinal direction at right angles to the cross-section;
- filling the cartridges with filter membranes;
- rolling up the cartridges to a cylindrical form;
- pushing the rolled-up cartridges into a cylindrical tube.

9. Method as claimed in claim 8, comprising the step of:
- closing the open side of the cartridges in order to prevent the filter membranes falling out during rolling-up.

10. Method as claimed in claim 9, wherein the cartridges are connected hingedly to each other by a film arranged on the cartridge, and wherein the open side of the cartridges is also closed by the film.

11. Method as claimed in claim 10, wherein the film is arranged by welding.

12. Method as claimed in any of the claims 8-11, comprising the step of:
- providing a cylindrical guide, which has an inlet opening in longitudinal direction such that the cartridges can be fed successively into the cylindrical guide and can be rolled up lying against the wall to form a cylinder.

## Patentansprüche

1. Membranhalterung, aufweisend eine Anzahl von Kartuschen zum Halten von länglichen Filtermembranen, wobei die Kartuschen einen im Wesentlichen V-förmigen Querschnitt haben, wobei die Kartuschen in Längsrichtung in rechten Winkeln zu dem Querschnitt gelenkig miteinander verbunden sind.

2. Membranhalterung gemäß Anspruch 1, wobei die Kartuschen länglich sind.

3. Membranhalterung gemäß Anspruch 2, wobei die Länge der Kartuschen im Wesentlichen gleich der Länge der länglichen Filtermembranen ist.

4. Membranhalterung gemäß irgendeinem der vorhergehenden Ansprüche, wobei die Kartuschen einen kegelstumpfartigen keilförmigen Querschnitt haben.

5. Membranhalterung gemäß irgendeinem der vorhergehenden Ansprüche, wobei jede Kartusche ein Umschließungselement zum Schließen der offenen Seite der Kartusche aufweist, um die Filtermembranen in den Kartuschen zu umschließen.

6. Membranhalterung gemäß Anspruch 5, wobei das Umschließungselement ein Film ist, der sich über die Kartuschen erstreckt und diese gelenkig miteinander verbindet.

7. Membranhalterung gemäß Anspruch 5, wobei das Umschließungselement ein an der Kartusche angeordnetes Befestigungselement ist.

8. Verfahren zum Herstellen eines Filters, aufweisend die folgenden Schritte:
- Bereitstellen einer Anzahl von Kartuschen mit einem im Wesentlichen V-förmigen Querschnitt, die in Längsrichtung in rechten Winkeln zu dem Querschnitt gelenkig miteinander verbunden sind,
- Füllen der Kartuschen mit Filtermembranen,
- Aufrollen der Kartuschen in eine Zylinderform,
- Schieben der aufgerollten Kartuschen in ein zylinderförmiges Rohr.

9. Verfahren gemäß Anspruch 8, aufweisend den folgenden Schritt:
- Schließen der offenen Seite der Kartuschen, um zu verhindern, dass die Filtermembranen während des Aufrollens herausfallen.

10. Verfahren gemäß Anspruch 9, wobei die Kartuschen durch einen an der Kartusche angeordneten Film gelenkig miteinander verbunden werden, und wobei die offene Seite der Kartuschen auch durch den Film verschlossen wird.

11. Verfahren gemäß Anspruch 10, wobei der Film durch Schweißen angeordnet wird.

12. Verfahren gemäß irgendeinem der Ansprüche 8 bis 11, aufweisend den folgenden Schritt:
- Bereitstellen einer zylinderförmigen Führung, die in Längsrichtung eine Einlassöffnung aufweist, so dass die Kartuschen der zylinderförmigen Führung nacheinander zugeführt werden können und an der Wand anliegend aufgerollt werden können, um einen Zylinder auszubilden.

## Revendications

1. Porte-membrane comprenant un certain nombre de cartouches pour maintenir des membranes filtrantes allongées, lesquelles cartouches ont une section transversale sensiblement en forme de V, dans lequel les cartouches sont raccordées de manière articulée entre elles dans la direction longitudinale à angles droits par rapport à la section transversale.

2. Porte-membrane selon la revendication 1, dans lequel les cartouches sont allongées.

3. Porte-membrane selon la revendication 2, dans lequel la longueur des cartouches est sensiblement la même que la longueur des membranes filtrantes allongées.

4. Porte-membrane selon l'une quelconque des revendications précédentes, dans lequel les cartouches comprennent une section transversale en forme de cale tronquée.

5. Porte-membrane selon l'une quelconque des revendications précédentes, dans lequel chaque cartouche comprend un élément d'enceinte pour fermer le côté ouvert de la cartouche afin d'enfermer les membranes filtrantes dans les cartouches.

6. Porte-membrane selon la revendication 5, dans lequel l'élément d'enceinte est un film qui s'étend par dessus et raccorde les cartouches de manière articulée entre elles.

7. Porte-membrane selon la revendication 5, dans lequel l'élément d'enceinte est un support agencé sur la cartouche.

8. Procédé pour fabriquer un filtre, comprenant les étapes consistant à:
- prévoir un certain nombre de cartouches de section transversale sensiblement en forme de V qui sont raccordées de manière articulée entre elles dans la direction longitudinale à angles droits par rapport à la section transversale;
- remplir les cartouches avec des membranes filtrantes;
- enrouler les cartouches en une forme cylindrique;
- pousser les cartouches enroulées jusque dans un tube cylindrique.

9. Procédé selon la revendication 8, comprenant l'étape consistant à:
- fermer le côté ouvert des cartouches afin d'empêcher les membranes filtrantes de tomber à l'extérieur pendant l'enroulement.

10. Procédé selon la revendication 9, dans lequel les cartouches sont raccordées de manière articulée entre elles par un film agencé sur la cartouche, et dans lequel le côté ouvert des cartouches est également fermé par le film.

11. Procédé selon la revendication 10, dans lequel le film est agencé par soudage.

12. Procédé selon l'une quelconque des revendications 8 à 11, comprenant l'étape consistant à :
- prévoir un guidage cylindrique, qui a une ouverture d'entrée dans la direction longitudinale de sorte que les cartouches peuvent être successivement introduites jusque dans le guidage cylindrique et peuvent être enroulées adossées contre la paroi afin de former un cylindre.
